# EUROPÄISCHE PATENTANMELDUNG

(11) **EP 1 005 918 A2**
(43) Veröffentlichungstag der Anmeldung: **07.06.2000**
(21) Anmeldenummer: 99811063.9
(22) Anmeldetag: 18.11.1999
(51) Int. Cl.: B07B 1/15

(54) **Siebförderrost**

(30) Priorität: 05.12.1998 DE 19856197
(71) Anmelder: Asea Brown Boveri AG, 5401 Baden (CH)
(72) Erfinder: Carcer, Bruno, 5000 Aarau (CH); Freiermuth, Friedrich, 10255 Cumbaja-Quito (EC); Pfiffner, Othmar, 8404 Winterthur (CH)
(74) Vertreter: Pöpper, Evamaria

(57) **Zusammenfassung**

Um bei einem Siebförderrost Verklemmungen zu beseitigen, die durch Reversieren des Antriebs allein nicht behoben werden können, ist vorgesehen, die Rostwalzen (1) einzeln oder gruppenweise vor dem Reversieren anzuheben.

## Beschreibung

### TECHNISCHES GEBIET

Die Erfindung bezieht sich auf einen Siebförderrost, umfassend eine Vielzahl von nebeneinander angeordneten, mit Förderscheiben versehenen Rostwalzen, die auf einem Walzenträger drehbar gelagert sind und von einer Antriebsvorrichtung angetrieben sind.

Die Erfindung nimmt dabei Bezug auf einen Stand der Technik, wie er sich beispielsweise aus der Veröffentlichung "Neuer Aubema-Spezialrollenrost für siebschwierige Schüttgüter" in der DE-Zeitschrift "Aufbereitungs-Technik", 33 (1992) Nr.5, S. 283 ergibt.

### TECHNOLOGISCHER HINTERGRUND UND STAND DER TECHNIK

Siebförderroste werden zum Vorsortieren und Trennen von Schüttgütern in Grob- und Kleinteile verwendet. Sie weisen eine Vielzahl von nebeneinander angeordneten, mit Förderscheiben versehenen Rostwalzen auf, die auf einem Walzenträger drehbar gelagert sind und von einer Antriebsvorrichtung angetrieben sind. Die Förderscheiben sind in vorbestimmten Abständen so angeordnet, dass sie entweder der jeweiligen Förderscheibe auf der benachbarten Rostwalze gegenüber oder auf Lücke stehen. Auf diese Weise werden quadratische oder rechteckige Klassieröffnungen gebildet. Kornfraktionen mit Kornspektren kleiner als die gewählten Klassieröffnungen gelangen in den Rostunterlauf. Kornfraktionen mit Kornspektren grösser als die gewählten Klassieröffnungen werden durch die Förderscheiben zum Rostabwurf befördert und als Ueberkorn ausgetragen.

Zwischen zwei benachbarten Förderscheiben kann es zu Verklemmungen kommen, die durch Reversieren des Antriebs allein nicht behoben werden können, z.B. wegen des hohen Massenträgheitsmoments der sich drehenden Wellen, die normalerweise aus Stahl bestehen. Auf diese Weise kann der Rostantrieb blokkiert werden. Diese Blockade ist insbesondere bei Siebförderrosten in Kehrichtverbrennungsanlagen kritisch, weil bei derartigen Anlagen Betriebsunterbrüche vermieden werden müssen. Um diese Schwierigkeiten zu vermeiden, ist beim bekannten Siebförderrost nach ,,Aufbereitungstechnik" a.a.O.vorgesehen, dass auf jeder zweiten Rostwalze zwischen den Förderscheiben in die Klassieröffnungen von unten eintauchende Ausheber angeordnet sind. Diese Ausheber arbeiten bei klassischem Grenzkornanfall zufriedenstellend, versagen jedoch bei Verklemmungen, an denen Stahlteile beteiligt sind; Analysen der Müllzusammensetzung haben nämlich gezeigt, dass immer mehr Stahl-Besteckteile (Messer, Gabeln etc.) irrtümlich in den Müll gelangen. Solche Metallteile führen zu massiven Verklemmungen des Siebförderrostes, und zwar deshalb, weil die Metallseparation in der Regel erst nach dem Klassieren erfolgt.

### KURZE DARSTELLUNG DER ERFINDUNG

Der Erfindung liegt die Aufgabe zugrunde, einen Siebförderrost der eingangs genannten Gattung zu schaffen, der ohne aufwendige Ausheber auskommt und bei Verklemmungen, insbesondere durch Stahlteile, nicht zu Betriebsunterbrüchen Anlass gibt.

Diese Aufgabe wird bei einem gattungsgemässen Siebförderrost erfindungsgemäss dadurch gelöst, dass die Zwischenscheiben zumindest teilweise aus einem gegenüber dem Material der Rostsscheiben spezifisch leichterem Material, vorzugsweise einer Aluminium-Legierung, bestehen.

Ausführungsbeispiele der Erfindung unsowie die damit erzielbaren Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: Eine teilweise Draufsicht auf einen bekannten Siebförderrost zur Verdeutlichung der der Erfindung zugrundeliegenden Problematik;
- Fig.2: ein erstes Ausführungsbeispiel eines Siebförderrostes nach der Erfindung in Seitenansicht, bei dem der zentrale Teil der Rostscheiben und/oder der Zwischenscheiben aus einer Leichtmetall-Legierung besteht, welcher zentrale Teil am Aussenumfang auswechselbare Verschleissteile aufweist, und jede zweite Rostwalze sich bei einer Blockade anheben lässt;
- Fig.3: einen Schnitt durch eine Rostwalze des Siebförderrostes nach Fig.2 mit Rostwalzen und Förderscheiben aus einer Leichtmetall-Legierung mit auswechselbaren Verschleissteilen am Aussenumfang;
- Fig.4: einen Ausschnitt einer Seitenansicht eines Siebförderrostes, und zwar auf eine mittels einer Kolben/Zylinderanodnung aushebbaren Rostwalze;
- Fig.5: ein weiteres Ausführungsbeispiel eines Siebförderrostes mit Rostwalzen, deren zentraler Teil aus einem elastisch nachgiebigen Kunststoff besteht, der am Aussenumfang von einem metallischen Verschleissteil umgeben ist;
- Fig.6: einen Schnitt durch die Aushebeanordnung des Walzenträgers nach Fig.4.

### WEGE ZUR AUSFÜHRUNG DER ERFINDUNG

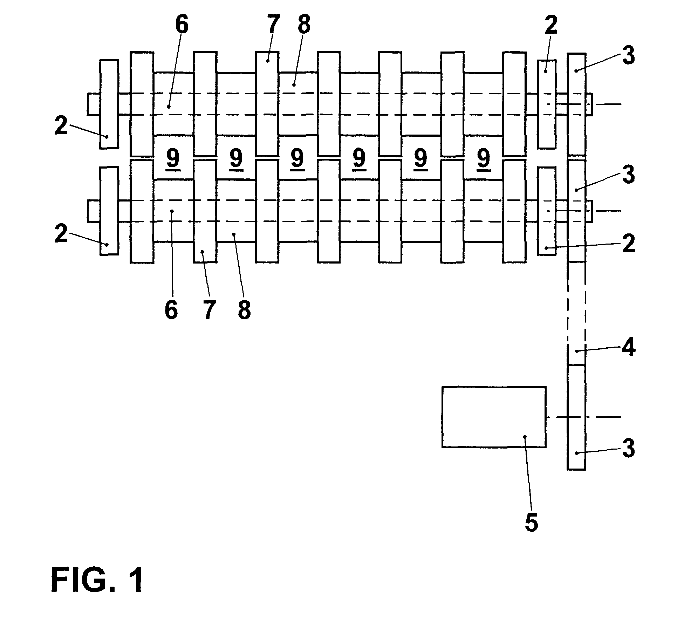

Der Siebförderrost nach Fig.1 umfasst eine Vielzahl von nebeneinander angeordneten Rostwalzen 1, die auf einem Walzenträger in Lagern 2 drehbar gelagert sind. Auf dem einen freien Ende der Rostwalze 1 ist je ein Kettenrad 3 befestigt. Mittels eines Antriebsmotors 5 wird eine Rollenkette 4 angetrieben, die mit den Kettenrädern 3 aller Rostwalzen 1 zusammenwirkt.

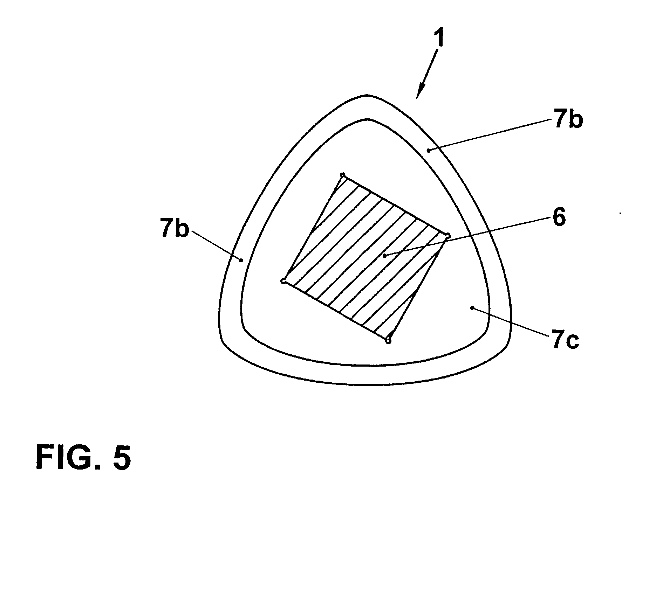

Jede Rostwalze 1 umfasst einen zentralen Dorn 6, auf dem abwechselnd Förderscheiben 7 und Zwischenscheiben 8 angeordnet sind. Die Förderscheiben 7 sind in vorbestimmten Abständen mittels Zwischenscheiben 8 kleineren Durchmessers so angeordnet, dass sie der jeweiligen Förderscheibe 7 auf der benachbarten Rostwalze gegenüberstehen. Auf diese Weise werden rechteckige Klassieröffnungen 9 gebildet. Stahlteile, wie Messer, Gabeln, die irrtümlich in den Müll gelangen, können zu massiven Verklemmungen des Siebförderrostes führen. Die Erfahrung hat gezeigt, dass in den meisten Fällen ein Reversieren des Antriebs (Umschalten der Drehrichtung des Antriebsmotors 5) allein die Verklemmung nicht beseitigen kann, z.B. wegen des hohen Massenträgheitsmoments der rotierenden Teile, die normalerweise aus Stahl bestehen. Der Grad/Schwere der Verklemmung(en) lässt sich erfindungsgemäss dadurch verkleinern, dass die Förderscheiben und/oder Zwischenscheiben zumindest teilweise aus einem gegenüber dem Material der Rostscheiben spezifisch leichteren Material, vorzugsweise einer Aluminium-Legierung, bestehen. Weil die Förderscheiben 7 mechanisch hoch beansprucht werden und aus diesem Grunde dem Verschleiss unterworfen sind, ist gemäss einer Weiterbildung der Erfindung vorgesehen, nur den zentralen Teil 7a der Förderscheiben 7 aus Leichtmetall herzustellen, und am Aussenumfang der Förderscheibe 7 vorzugsweise auswechselbare Verschleissstücke 7b anzubringen (Fig.3).

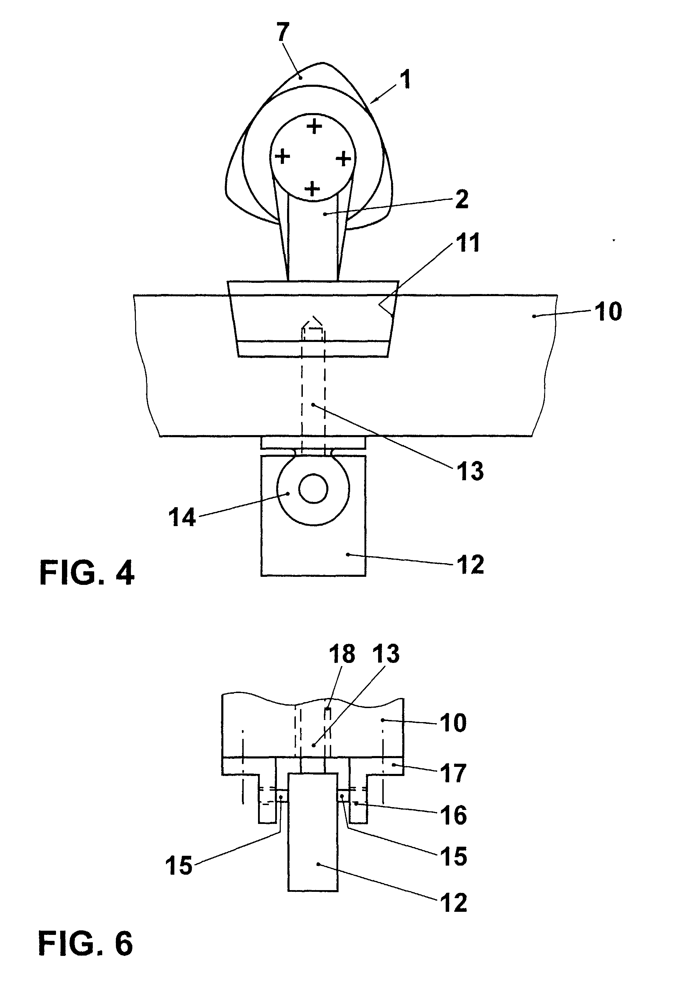

Eine Alternative zur Ausführung nach Fig.3 und 4 sieht vor,den zentralen Teil 7c der Förderscheibe 7 aus einem elastisch nachgiebigen Kunststoff, z.B. einem Elastomer, herzustellen, der am Aussenumfang von einem metallisches Verschleissteil 7d umgeben ist. Diese Ausführungsform vereint den Vorteil geringen Massenträgheitsmoments und einer gewissen Elastizität zwischen benachbarten Rostwalzen 1, mit dem Effekt, dass Verklemmungen zwar nicht vermieden werden, aber der Grad der Verklemmung erniedrigt wird, so dass durch Reversieren des Antriebs die Verklemmung beseitigt werden kann.

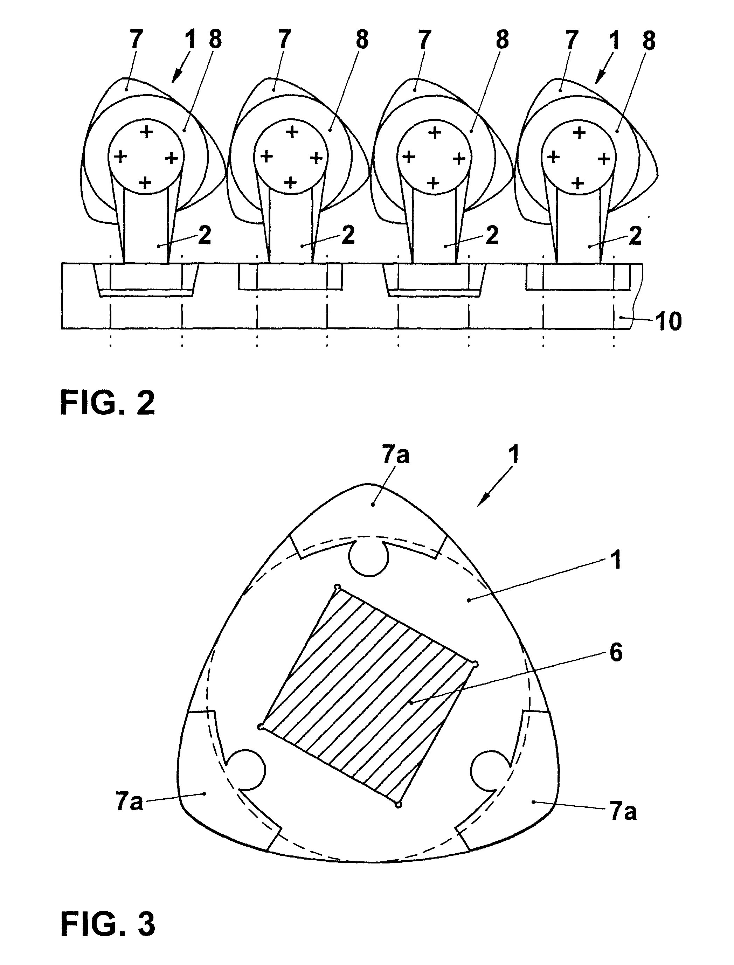

Eine weitere besonders bevorzugte Ausführungsform der Erfindung sieht vor, dass die Lagerung der Rostwalzen im Walzenträger derart angeordnet und ausgebildet ist, dass die Lagerung jeder zweiten Rostwalze 1 vertikal und/oder seitlich verschiebbar ist. Damit lassen sich weitaus grössere Ausweichwege für benachbarte Rostwalzen schaffen, als es mit Elastomeren nach Fig.4 möglich ist. Diese Variante ist in Fig.2 und noch detaillierter in Fig.6 beispielsweise veranschaulicht: Die Lager 2 jeder zweiten Rostwalze 1 sind nicht fest mit dem Walzenträger 10 verbunden, sondern dort vertikal verschiebbar angeordnet; zu diesem Zweck sind die dem Walzenträger zugewandten Enden der Lager 2 formschlüssig in Ausnehmungen 11 im Lagerträger 10 geführt. Eine von einer doppelt wirkenden Kolben-/Zylinderanordnung 12 angetriebene Kolbenstange 13 gestattet es, je nach Beaufschlagung des Kolbens, das Lager 2 und damit vor dem Reversieren die Rostwalze 1 in der Ausnehmung 11 vertikal, d.h.senkrecht zur Rostlängsrichtung, um typisch 10 mm zu verschieben. Wie aus Fig.5 hervorgeht, ist der Zylinder 12 nicht fest mit dem Walzenträger 10, sondern um eine Achse senkrecht zur Rostlängsrichtung schwenkbar verbunden. Zu diesem Zweck weist der Zylinder an seinem walzenseitigen Ende zwei Zapfen 15 auf, die in Bohrungen 16 der Zylinderhalterung 17 eintauchen. Die Kolbenstange 13 der Kolben-/Zylinderanordnung durchdringt den Walzenträger 10 mit Spiel 18, so dass die Kolbenstange 13 und damit die Rostwalze 1 auch Ausweichbewegungen in seitlicher Richtung ausführen kann.

### BEZEICHNUNGSLISTE

- 1: Rostwalzen
- 2: Lager von 1
- 3: Kettenräder
- 4: Rollenkette
- 5: Antriebsmotor
- 6: zentraler Dorn
- 7: Förderscheiben
- 7a,c: zentraler Teil von 1
- 7b: Verschleissteil an 7
- 8: Zwischenscheiben
- 9: Klassieröffnungen
- 10: Walzenträger
- 11: Ausnehmung in 10
- 12: Kolben-/Zylinderanordnung
- 13: Kolbenstange von 12
- 14: Zylinderhalterung
- 15: Zapfen
- 16: Bohrungen in 17
- 17: Zylinderhalterung
- 18: Spiel zwischen 10 und 13

## Patentansprüche

1. Siebförderrost, umfassend eine Vielzahl von nebeneinander angeordneten Rostwalzen (1), die auf einem zentralen Dorn (6) Förderscheiben (7) und Zwischenscheiben (8) tragen, welche Rostwalzen (1) auf einem Walzenträger (10) drehbar gelagert sind und von einer Antriebsvorrichtung (3,4,5) angetrieben sind, dadurch gekennzeichnet, dass die Zwischenscheiben (8) zumindest teilweise aus einem gegenüber dem Material der Förderscheiben (7) spezifisch leichterem Material, vorzugsweise einer Aluminium-Legierung, bestehen.

2. Siebförderrost, umfassend eine Vielzahl von nebeneinander angeordneten Rostwalzen, die Rostscheiben und Zwischenscheiben tragen, welche Rostwalzen auf einem Walzenträger drehbar gelagert sind und von einer Antriebsvorrichtung angetrieben sind,dadurch gekennzeichnet, dass der zentrale Teil der Rostscheiben und/oder der Zwischenscheiben aus einer Leichtmetall-Legierung,vorzugsweise Aluminium-Legierung, besteht, welcher zentrale Teil am Aussenumfang auswechselbare Verschleissteile aufweist.

3. Siebförderrost nach Anspruch 2,dadurch gekennzeichnet, dass der besagte zentrale Teil aus einem elastisch nachgiebigen Kunststoff, z.B. einem Elastomer, besteht.

4. Siebförderrost nach einem der Ansprüche 1 bis 3, dadurch gekennzeichnet, dass die Lagerung der Rostwalzen im Walzenträger derart angeordnet und ausgebildet ist, dass die Lagerung jeder zweiten Rostwalze auf dem dem Antrieb abgewandten Ende vertikal und/oder seitlich verschiebbar ist.
